# EUROPÄISCHE PATENTSCHRIFT

(11) **EP 0 615 877 B1**
(45) Veröffentlichungstag und Bekanntmachung des Hinweises auf die Patenterteilung: **17.07.1996**
(21) Anmeldenummer: 94101745.1
(22) Anmeldetag: 05.02.1994
(51) Int. Cl.: B60K 5/12

(54) **Kraftfahrzeug mit einer Antriebsaggregatslagerung**
Motor vehicle with a drive unit mounting
Véhicule automobile avec support de l'unité motrice

(30) Priorität: 13.03.1993 DE 4307999
(43) Veröffentlichungstag der Anmeldung: 21.09.1994
(73) Patentinhaber: Dr.Ing. H.C.F. PORSCHE AKTIENGESELLSCHAFT, D-70432 Stuttgart (DE)
(72) Erfinder: Türi, Julius, D-71397 Leutenbach (DE); Joest, Rainer, D-75417 Mühlacker (DE); Fischle, Rüdiger, D-71287 Flacht (DE); von Sivers, Rolf, D-71277 Rutesheim (DE)

(56) Entgegenhaltungen:
- DE-A- 3 940 541
- DE-A- 4 111 613
- DE-C- 873 936
- DE-C- 919 929
- GB-A- 2 022 037
- US-A- 3 018 990

## Beschreibung

Die Erfindung bezieht sich auf ein Kraftfahrzeug mit einer Torsions- und Biegeschwingungen unterworfenen Karosserie nach dem Oberbegriff des Anspruchs 1.

Ein Fahrzeug besteht aus einer Vielzahl von schwingenden Systemen. Eines davon ist die Karosserie selbst. Diese steht mit anderen Fahrzeugkomponenten wie dem Fahrwerk oder dem elastisch gelagerten Aggregat in Wechselwirkung und sie beeinflussen sich gegenseitig. So werden beispielsweise die niederfrequenten translatorischen und rotatorischen Karosserieschwingungen durch die Fahrwerksabstimmung beeinflusst. Die Stoßdämpfer bedämpfen störende Hub- und Wankbewegungen.

Nahezu unbedämpft sind dagegen die Karosserie-Biege- und -Torsionsschwingungen. Sie werden im Fahrbetrieb durch Fahrbahnunebenheiten angeregt und in Form von Vibrationen über den Sitz, die Lehne und die Lenkung auf den Fahrer übertragen. Bei Cabriolet-Fahrzeugen ist auch das visuell wahrnehmbare Zittern störend.

Je nach Fahrzeugkonzeption haben die Karosseriemoden unterschiedliche Amplituden und Resonanzen. Abhängig vom Zusammenwirken mit anderen Schwingungssystemen und angeregt durch die Fahrbahn sind sie vor allem bei Cabriolet-Fahrzeugen von Bedeutung. Sie entscheiden mit über den Komfort und den Qualitätseindruck des Fahrzeugs und gewinnen daher zunehmend an Bedeutung.

Aus der DE-C-873 936 ist ein Antriebsagregat bekannt, dem zur Vermeidung von Schwingungen an den Antriebswellen, diese in die Hauptträgheitsachse verlegt werden, was durch die Anordnung der einzelnen Agregate bewirkt wird. Desweiteren ist aus der DE-A-41 11 613 eine Antriebsbaugruppe bekannt, die als Tilgermasse wirkt. Die Torsionsschwingungen der Fahrzeugkarosserie werden in Längsschwingungen der Antriebseinheit umgesetzt, wozu die elastischen Lager gegenseitig geneigt angeordnet sind.

Aufgrund der offenen Rohbaustruktur ohne die versteifende Wirkung eines festen Daches haben Cabriolet-Fahrzeuge meistens eine geringere Karosseriesteifigkeit als Coupé-Fahrzeuge.

Ein besonders auf schlechten Straßen auftretendes Karosseriezittern wird wesentlich bestimmt durch die Amplituden und Resonanzfrequenzen der Karosserie-Biege- und -Torsionsschwingungen ersten Grades.

Im Frequenzbereich von etwa 11 bis 24 Hz liegen nicht nur die für Cabrios so wichtigen Karosserieschwingungen 1. Grades, sondern auch die Eigenresonanzen der ungefederten Fahrzeugmassen sowie die Starrkörpermoden des in seinen Gummielementen elastisch gelagerten Antriebsaggregats.

Untersuchungen an Straßenoberflächen und der daraus resultierenden Fahrzeuganregung zeigen, daß mit kleiner werdender Wellenlänge der Unebenheiten die spektrale Unebenheitsdichte abnimmt. Dies bedeutet, daß bei gleicher Fahrgeschwindigkeit tieffrequentere Karosseriemoden bei Cabrios stärker angeregt werden als die höherfrequenten bei Coupés.

Ein Zusammenwirken verschiedener Schwingungssysteme führt bei Cabrios zwangsläufig zu erhöhten Schwingungsamplituden bei den Karosseriemoden. Während bei einem Coupé die Karosserietorsion bei Straßenfahrt nicht bzw. nur unwesentlich angeregt wird, ist sie beim Cabrio meistens von entscheidender Bedeutung.

In vielen Fällen wird ein Cabrio auch aus einer Coupé-Karosserie abgeleitet, so daß grundlegende strukturelle Änderungen selten möglich sind. Versteifungsmaßnahmen am Rohbau können wegen verschiedenster Randbedingungen oft nur in begrenztem Umfang durchgeführt werden.

Abgesehen von den damit verbundenen hohen Werkzeugkosten, einer nicht unbedeutenden Gewichtserhöhung und Packaging-Problemen werden die erwarteten Ansprüche nur schwer oder teilweise erfüllt.

Aus diesem Grund werden verstärkt Sekundärmaßnahmen wie Karosserieschwingungstilger eingesetzt. Diese reduzieren die maximale Amplitude der Karosserie-Torsionsschwingung und bringen je nach Anzahl und Gewicht der verwendeten Massen bei optimaler Abstimmung einen beträchtlichen Erfolg. Ihre Wirkung ist aber meistens schmalbandig, so daß eine exakte Frequenzabstimmung erforderlich ist.

Serienstreuungen, Materialermüdung und Temperatureinflüsse können zu einer erheblichen Minderung der Wirksamkeit führen. Hinzu kommt je nach Anzahl und Gestaltung der Tilgermassen ein beträchtliches Mehrgewicht.

Eine Anordnung gemäß dem Oberbegriff des Anspruchs 1 ist in DE-A-4 111 613 beschrieben. Um eine Tilgung von Torsionsschwingungen der Fahrzeugkarosserie zu erreichen, wird dort die Antriebsbaugruppe als Tilgernasse herangezogen. Die Antriebsbaugruppe ist über elastische Lager in der Fahrzeugkarosserie so gelagert, daß Torsionsschwingungen der Karosserie in Längsschwingungen der Antriebseinheit umgesetzt werden, wozu gegenseitig geneigte elastische Lager vorgesehen sind.

Aufgabe der Erfindung ist es, mit einem als Tilger wirkenden Antriebsaggregat die Karosserieschwingungen weitestgehend zu reduzieren.

Diese Aufgabe wird erfindungsgemäß durch die kennzeichnenden Merkmale des Anspruchs 1 gelöst. Weitere vorteilhafte Merkmale beinhalten die Unteransprüche

Die mit der Erfindung hauptsächlich erzielten Vorteile bestehen darin, daß die Masse des Antriebsaggregats soweit schwenkbeweglich über die elastischen Lager um eine Rollachse in der Karosserie gehalten ist, daß die Karosserieschwingungen, wie beispielsweise die Karosserie-Torsionsschwingungen, weitestgehend reduziert werden. Hierzu sind Maßnahmen hinsichtlich der Lagerorte, der Steifigkeitsabstimmung und der Lage der Aggregatrollachse zum Gesamtschwerpunkt des Antriebsaggregates erforderlich.

So ist insbesondere das Antriebsaggregat als Kompaktaggregat ausgerichtet und mit zwei elastischen Lagerelementen nahe der beiden hinteren Karosserieecken sowie einem in der Fahrzeugmittellängsachse angeordneten Motorlager aufgehängt.

Durch Variation der Vertikalsteifigkeiten der beiden hinteren Getriebelager - in bezug auf die Fahrtrichtung - kann die Aggregat-Rollmode um die Fahrzeuglängsachse auf die Karosserie-Torsion abgestimmt werden. Insbesondere ist das in der Rollachse gelegene Motorlager in Ruhe, während die in den beiden Getriebelager in schwingungsreichen Bereichen angeordnet sind, wobei eine möglichst große Basis zwischen diesen Lagern außerordentlich wichtig ist. Nur so können die zur Tilgerabstimmung erforderlichen Lagersteifigkeiten an den beiden Getriebelagern gering gehalten werden.

Die Lager sind in einer Schrägebene angeordnet, die durch den Aggregateschwerpunkt verläuft.

Vorzugsweise weist das Kraftfahrzeug auch die folgenden Merkmale auf:
Zur Erzielung einer Reduzierung der Torsionsschwingungen in der Karosserie sind zur Verbesserung des Vertikalkomforts bei Straßenfahrt, einer Verminderung des über die Lager übertragenen Körperschalls sowie einer breitbandigen Tilgerwirkung, die drei Lager mit definierten Steifigkeiten ausgeführt. So sind die Lager in Vertikalrichtung steifer ausgeführt als in Längsrichtung und weisen eine etwa gleiche Steifigkeit in Quer- und in Vertikalrichtung auf.

Die Getriebelager sind in querliegenden Konsolen gehalten, welche jeweils aus einem in einer vertikalen Ebene stehenden Federblatt bestehen. Diese sind in vertikaler Belastungsrichtung um die Rollachse steif und in Fahrzeuglängsrichtung zur Aufnahme von Längsbewegungen bedingt auslenkbar ausgeführt. Eine Befestigung zum Getriebegehäuse erfolgt über Schrauben, die sich in der Konsole über teilweise eingefasste Hülsen abstützen.

Die Tilgerwirkung des Antriebsaggregats kann sowohl für einen Heckmotor als auch für einen Frontmotor verwendet werden, wobei der Motor als quer eingebauter Motor oder längs eingebauter Motor ausgeführt sein kann.

Die Lager können als Gummilager oder auch als Hydrolager ausgebildet sein.

Zur Heranziehung des Antriebsaggregats als Tilgermasse für Karosserieschwingungen sind die dynamischen Vertikalsteifigkeiten der beiden äußeren Getriebe-Lagerelemente von entscheidender Bedeutung. Bei Einsatz von Hydrolagern ist das akustische Koppelungssystem an die speziellen Verhältnisse anzupassen. Durch Wahl eines geeigneten Entkoppelungsspiels ist die dynamische Lagersteifigkeit im relevanten Schwingwegbereich abzustimmen.

Eine gezielt abgestimmte Lagerdämpfung sorgt für geringes, vertikales Motorstuckern, verbessert die Breitbandigkeit und somit die Unempfindlichkeit gegen Serienstreuungen. Bei zu hoher Dämpfung wird jedoch die Tilgerwirkung vermindert, da sich eine Aggregatrollmode nicht ausbilden kann.

Die maximale Wirkung eines als Tilger abgestimmten Aggregats wird erreicht werden bei optimaler Aggregatlagerkonzeption passender dynamischer Karosseriesteifigkeit und im Detail abgestimmter Aggregatlager. Bei unvorteilhafter Lagerkonzeption stellt die Notwendigkeit nach einer ausreichenden Körperschallisolation eine Grenze dar.

Grundsätzlich wirkt in vorteilhafter Weise das Antriebsaggregat als Tilger, wenn die beiden Getriebelagerorte eine maximal große Basis haben. Sie befinden sich außen an den Karosserielängsträgern oder entsprechenden seitlichen Aufbauteilen. Dies ermöglicht eine hohe Eigenfrequenz der Aggregat-Rollmode bei geringer Lagersteifigkeit, so daß auf eine wirksame akustische Isolation der Lager nicht verzichtet werden muß.

Die Position der Getriebelager an den schwingungsreichen Karosserieecken ermöglicht eine effektive Tilgung der Torionsmode.

Das dritte Lager, das Motorlager, befindet sich in der Aggregat-Rollachse. Die betilgenden Kräfte werden nur über die Getriebelager übertragen, d.h. an Stellen mit hoher Karosserieempfindlichkeit.

Die sportliche Fahrwerksabstimmung, extreme Niederquerschnittsreifen und die große Spurweite führen zu einer verstärkten Anregung der Karosserietorsion bei Straßenfahrt, die durch das als Tilger wirkende Antriebsaggregat wesentlich vermindert werden.

Ein Ausführungsbeispiel der Erfindung ist in der Zeichnung dargestellt und wird im folgenden näher beschrieben.
Es zeigen
- Fig. 1: eine Seitenansicht eines Kraftfahrzeugs mit einem Antriebsaggregat und Lagerungen,
- Fig. 2: eine Draufsicht zu Fig. 1,
- Fig. 3: eine Ansicht in Pfeilrichtung Z der Fig. 1 gesehen,
- Fig. 4: eine Ansicht auf eine Konsole für ein Getriebelager, wobei - in bezug auf die Fahrtrichtung - die linke Konsole dargestellt ist,
- Fig. 5: eine Ansicht auf die Konsole in Pfeilrichtung R der Fig. 4 gesehen,
- Fig. 6: eine Draufsicht auf die Konsole.

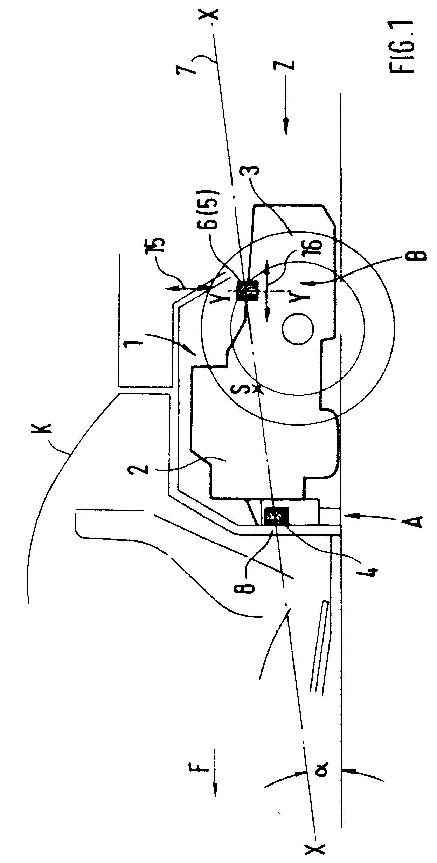

In Fig. 1 ist ein Kraftfahrzeug mit einem hinteren Antriebsaggregat 1, bestehend aus Motor 2 und Getriebe 3, schematisch dargestellt. Dieses Aggregat 1 ist über ein - in bezug auf die Fahrtrichtung F - vornliegendes Motorlager 4 und zwei hintenliegende Getriebelager 5 und 6 in der Karosserie K gehalten.

Das Motorlager 4 ist in einem schwingungsarmen Bereich A in der Aggregat-Rollachse 7 angeordnet und an einem Querträger 8 des Fahrzeugaufbaus abgestützt. Mittels einer Traverse 10 ist das Lager 4 mit dem Motorgehäuse 11 verbunden.

Das Getriebe 3 ist über die Lager 5 und 6, welche endseitig von querverlaufenden und mit dem Getriebegehäuse 14 verbundenen Konsolen 12, 13 gehalten sind, an der Karosserie K abgestützt. Diese Lager 5 und 6 sind in einem schwingungsreichen Bereich B, welcher außerhalb der Rollachse 7 vorzugsweise in Karosserieeckbereichen angeordnet, in denen maximale Torsionsschwingungsampülituden herrschen.

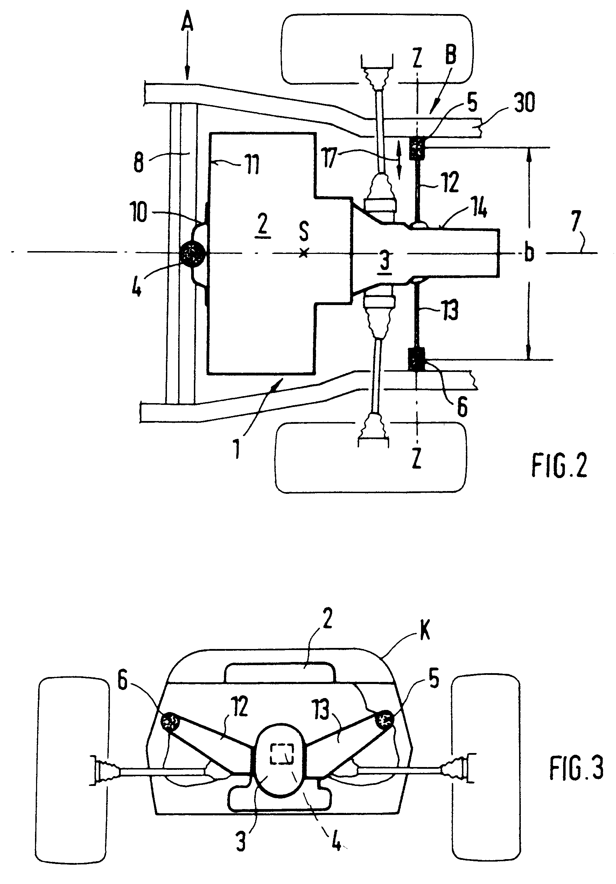

Die Lager 4, 5 und 6 sind in einer unter einem Winkel angestellten Schrägebene X-X vorgesehen, die annähernd durch den Gesamtschwerpunkt S des Antriebsaggregates 1 verläuft und in der die Aggregat-Rollachse 7 liegt. Insbesondere sind die Getriebelager 5, 6 mit einer großen Basis b (Fig. 2), d.h. möglichst weit auseinanderliegend, an der Karosserie K befestigt, da die Torsionsausschläge hier am größten und somit die Betilgung der Torsionsschwingungen der Karosserie an diesem Ort am wirkungsvollsten ist.

Die Getriebelager 5, 6 sind in der Weise zum Antriebsaggregat bzw. zur Karosserie abgestimmt, daß sie eine eine hohe Eigenfrequenz der Aggregat-Rollmode bestimmende und genau auf die Karosserietorsion abgestimmte Kennung mit geringer Vertikal-Lagersteifigkeit aufweisen.

Hierdurch kann das Antriebsaggregat 1 um seine Rollachse 7 so frei schwingen, daß es als Tilger wirkt, aber auch ein Vertikalkomfort in bezug auf von der Straße kommende Störgrößen erreicht wird.

Die Vertikalsteifigkeiten in Pfeilrichtung 15 der Getriebelager 5, 6 sind so abgestimmt, daß sie gegenüber den Längssteifigkeiten in Pfeilrichtung 16 größer sind. Die Quersteifigkeit in Pfeilrichtung 17 entspricht in etwa der Vertikalsteifigkeit in Pfeilrichtung 15. Das derart als Tilger abgestimmte Antriebsaggregat 1 führt zu einer erheblichen Reduktion der Karosserietorsion, durch Gegenschwingungen des Antriebsaggregats 1, wobei das Motorlager 4 in Ruhe verbleibt.

Durch eine spezielle Abstimmung der Vertikalsteifigkeiten der beiden Getriebelager 5 und 6 ist die Aggregat-Rollmode um die Fahrzeuglängsachse auf die Karosserietorsion in einfacher Weise abstimmbar.

Die Lager 4, 5 und 6 sind an Trägern des Fahrzeugaufbaus bzw. an steifen Aufbauelementen oder an zwischengesetzten Bauelementen abgestützt. Diese Abstüzungen sind stabil und steif ausgeführt.

Die Getriebelager 5, 6 sind über querverlaufende Konsolen 12, 13 mit dem Getriebegehäuse 14 verbunden. Diese Konsolen 12, 13 sind als Blattfedern ausgeführt und in einer senkrechten Ebene Y-Y angestellt, so daß sie in Vertikalrichtung, d.h. bei Bewegung des Aggretgats, um die Rollachse 7 steif und in Fahrzeuglängsrichtung bedingt ausbiegbar sind.

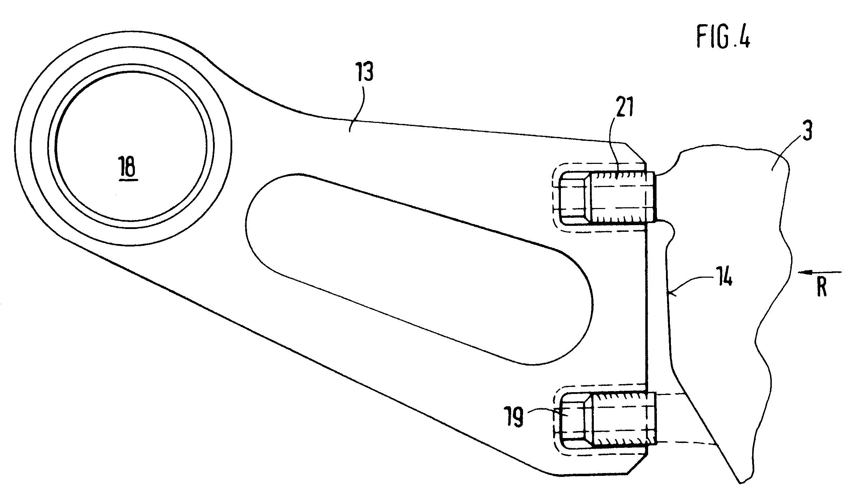

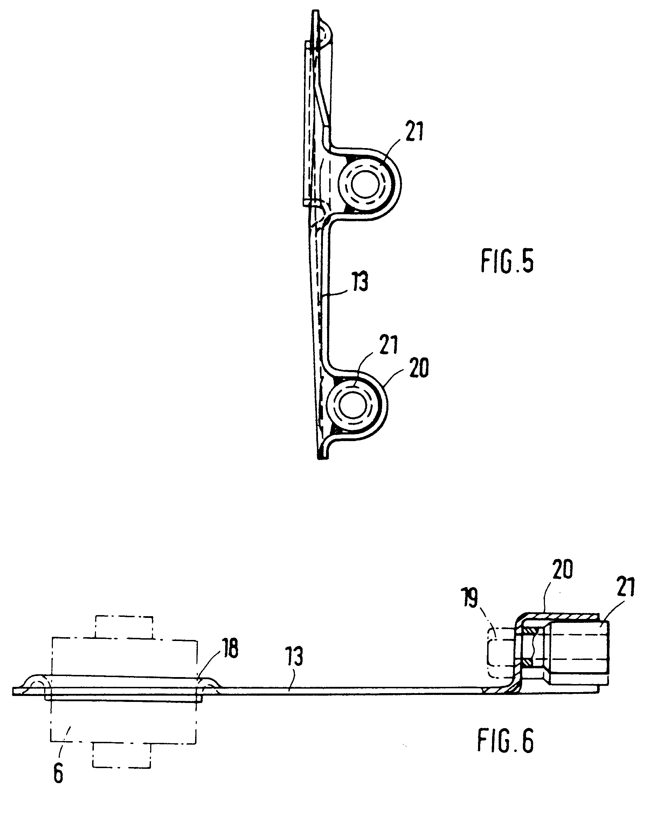

Wie die Fig. 4 bis 6 näher zeigen, ist das Lager 6 in einer Aufnahme 18 der Konsole 13 gehalten, wobei die Befestigung der Konsole 13 am Getriebegehäuse 14 über Schrauben 19 erfolgt. Die Schrauben 19 stützen sich an teilweise von partiellen Ausformungen 20 der Konsole 13 umgebenen Hülsen 21 ab, die direkt an der Gehäusewand mit einer Stirnfläche anliegen. Die Hülsen 21 sind mit der Konsole 13 fest verbunden.

Ein Verspannen des Aggregates in Fahrtrichtung F sowie entgegen dessen Fahrtrichtung F wird durch das in diesen Richtungen weiche Federblatt 12, 13 nahezu ausgeschlossen. Ein zusätzlicher Toleranzausgleich in Fahrtrichtung und entgegen in den Lagern 5 und 6 kann entfallen, da die Längskräfte hauptsächlich vom Motorlager aufgenommen werden.

## Patentansprüche

1. Kraftfahrzeug mit einer Torsions- und Biegeschwingungen unterworfenen Karosserie, insbesondere einer Cabriolet-Karosserie, an der über elastische Lager eine Antriebseinheit als Tilgermasse wirkend aufgehängt ist, wobei zwischen Längs- und Querträgern der Karosserie das Antriebsaggregat über drei elastische Lager gehalten ist, **dadurch gekennzeichnet,** daß das eine - in bezug auf die Fahrtrichtung (F) - vornliegende Motorlager im schwingungsarmen Bereich (A) der Karosserie in der Aggregat-Rollachse (7) angeordnet ist und die beiden hintenliegenden Getriebelager (5, 6) mit einer Basis (b) an steifen Fahrzeugaufbauelementen (30) in einer Querebene (Z-Z) und außerhalb der Rollachse (7) in einem Bereich (B) der Karosserie mit maximalen Torsions-Schwingungsamplituden gehalten sind, und daß die beiden Getriebelager (5, 6) eine hohe Eigenfrequenz der Aggregat-Rollmode bestimmende und genau auf die Karosserietorsion abgestimmte Kennung der Vertikallagersteifigkeit zur Erzielung eines als Tilger um die Rollachse (7) freischwingenden Antriebsaggregats (1) aufweisen und die drei Lager (4, 5 und 6) in einer - in bezug auf die Fahrtrichtung (F) - nach hinten ansteigenden und unter einem Winkel (α) stehenden Schrägebene (X-X) angeordnet sind, die durch den Gesamtschwerpunkt (S) verläuft.

2. Kraftfahrzeug nach Anspruch 1, **dadurch gekennzeichnet,** daß die elastischen Lager (4, 5 und 6) in Vertikalrichtung (15) eine größere Steifigkeit aufweisen als in Längsrichtung (16) und eine etwa gleiche Steifigkeit in Querrichtung (17) wie auch in Vertikalrichtung (15) besitzen.

3. Kraftfahrzeug nach den Ansprüchen 1 oder 2, **dadurch gekennzeichnet,** daß das Motorlager (4) in einem am Fahrzeugaufbau abgestützten Querträger (8) gehalten ist, wobei die Getriebelager (5,6) jeweils in einer querliegenden Konsole (12, 13), welche mit dem Getriebegehäuse (14) verbunden ist, gelagert sind.

4. Kraftfahrzeug nach Anspruch 3, **dadurch gekennzeichnet,** daß die Konsolen (12, 13) aus vertikal ausgerichteten Federblättern bestehen, die in Vertikalrichtung um die Aggregat-Rollachse (7) steif und in Fahrzeuglängsrichtung bedingt auslenkbar ausgebildet sind.

5. Kraftfahrzeug nach den Ansprüchen 3 oder 4, **dadurch gekennzeichnet,** daß die Verbindung der Konsolen (12, 13) zum Getriebegehäuse (14) über Schrauben (19) erfolgt, die in Hülsen (21) angeordnet sind, welche an der Konsole (12, 13) von einer Ausformung (20) teilweise umschlossen und in dieser befestigt sind.

## Claims

1. A motor vehicle with a bodywork, in particular a convertible bodywork, which is subjected to torsional and flexural vibrations and on which a drive unit is suspended by way of resilient bearings so as to act as a damper mass, wherein the drive unit is held between longitudinal and transverse supports of the bodywork by way of three resilient bearings, **characterized in that** one engine bearing situated in front with respect to the direction of travel (**F**) is arranged in the low-vibration region (**A**) of the bodywork in the rolling axis (7) of the unit and the two transmission bearings (5, 6) at the rear with a base (**b**) are held on rigid members (30) of the vehicle body in a transverse plane (**Z-Z**) and outside the rolling axis (7) in a region (**B**) of the bodywork with maximum torsional-vibration amplitudes, and the two transmission bearings (5, 6) have a characteristic of the vertical bearing rigidity determining [a] high natural frequency of the rolling behaviour of the unit and adapted precisely to the torsion of the bodywork so as to produce a drive unit (1) oscillating freely about the rolling axis (7) as a damper, and the three bearings (4, 5 and 6) are arranged in an oblique plane (**X-X**) ascending towards the rear with respect to the direction of travel (**F**) and arranged at an angle (**α**) and extending through the overall centre of gravity (**S**).

2. A motor vehicle according to Claim 1, **characterized in that** the resilient bearings (4, 5 and 6) have a greater degree of rigidity in the vertical direction (15) than in the longitudinal direction (16), and have a substantially equal degree of rigidity in the transverse direction (17) as in the vertical direction (15).

3. A motor vehicle according to Claim 1 or 2, **characterized in that** the engine bearing (4) is held in a transverse support (8) supported on the vehicle body, wherein the transmission bearings (5, 6) are mounted in a respective transversely arranged bracket (12, 13) connected to the transmission housing (14).

4. A motor vehicle according to Claim 3, **characterized in that** the brackets (12, 13) comprise vertically orientated spring leaves constructed so as to be rigid about the rolling axis (7) of the unit in the vertical direction and deflexible to a limited extent in the longitudinal direction of the vehicle.

5. A motor vehicle according to Claim 3 or 4, **characterized in that** the brackets (12, 13) are connected to the transmission housing (14) by way of bolts (19) arranged in sleeves (21) partly surrounded on the bracket (12, 13) by a convexly shaped portion (20) and secured therein.

## Revendications

1. Véhicule automobile avec une carrosserie soumise à des oscillations de torsion et de flexion, en particulier une carrosserie de cabriolet, à laquelle est suspendue, par des paliers élastiques, une unité d'entraînement servant de masse d'amortissement, le groupe moteur étant maintenu par des paliers élastiques entre des longerons et des traverses de la carrosserie, caractérisé en ce qu'un palier de moteur, situé à l'avant - par rapport au sens de marche (F) - est placé dans la zone A peu sujette à oscillation de la carrosserie, dans l'axe de roulis du groupe et les paliers de transmission (5, 6) situés à l'arrière sont maintenus avec une base (8) sur des éléments de carrosserie (30) rigides du véhicule dans un plan transversal (Z-Z) et à l'extérieur de l'axe de roulis (7) dans une zone (B) de la carrosserie avec des amplitudes d'oscillation de torsion maximales, et en ce que les deux paliers de transmission (5, 6) présentent une fréquence de résonance élevée de la caractéristique de la rigidité du palier vertical, déterminant le mode de roulis du groupe et exactement adaptée à la torsion de la carrosserie, pour obtenir un groupe moteur (A) oscillant librement en tant qu'amortisseur autour de l'axe de roulis (7) et les trois paliers (4, 5 et 6) sont disposés dans un plan oblique (X-X) montant vers l'arrière - par rapport au sens de marche (F) - et formant un angle (α), plan qui passe par le centre de gravité d'ensemble (S).

2. Véhicule automobile selon la revendication 1, caractérisé en ce que les paliers élastiques (4, 5 et 6) présentent dans la direction verticale une plus grande rigidité que dans la direction longitudinale et possèdent à peu près la même rigidité dans la direction transversale que dans la direction verticale.

3. Véhicule automobile selon les revendications 1 ou 2, caractérisé en ce que le palier de moteur (4) est maintenu dans une poutre transversale (8) prenant appui contre la carrosserie du véhicule, les paliers de transmission (5, 6) étant montés chacun dans une console (12, 13) transversale, qui est reliée au carter de transmission (14).

4. Véhicule automobile selon la revendication 3, caractérisé en ce que les consoles (12, 13) sont constituées de lames de ressort orientées verticalement, qui sont rigides dans la direction verticale autour de l'axe de roulis (7) du groupe et qui peuvent être déviées, de manière conditionnée, dans la direction longitudinale du véhicule.

5. Véhicule automobile selon les revendications 3 ou 4, caractérisé en ce que la liaison des consoles (12, 13) avec le carter de transmission (4) s'effectue par des vis (19), qui sont placées dans des douilles (21), qui sur la console (12, 13) sont en partie enfermées par un bossage (20) et fixées dans celui-ci.
